# EUROPÄISCHE PATENTSCHRIFT

(11) **EP 0 743 005 B1**
(45) Veröffentlichungstag und Bekanntmachung des Hinweises auf die Patenterteilung: **04.08.1999**
(21) Anmeldenummer: 96107924.1
(22) Anmeldetag: 17.05.1996
(51) Int. Cl.: A22B 3/06

(54) **Vorrichtung zum elektrischen Betäuben von Schlachttieren**
Electrical stunning apparatus
Dispositif pour l'assomage électrique d'animaux de boucherie

(30) Priorität: 19.05.1995 DE 19518537
(43) Veröffentlichungstag der Anmeldung: 20.11.1996
(73) Patentinhaber: Banss Maschinenfabrik GmbH & Co. KG, D-35216 Biedenkopf (DE)
(72) Erfinder: Weigel, Wilfried, 35232 Dautphetal-Friedensdorf (DE)
(74) Vertreter: Klunker . Schmitt-Nilson . Hirsch

(56) Entgegenhaltungen:
- EP-A- 0 561 470
- DE-A- 4 037 203
- DE-C- 4 320 966

## Beschreibung

Die Erfindung bezieht sich, nach einem ersten Aspekt, auf eine Vorrichtung zum elektrischen Betäuben von Schlachttieren, insbesondere Schweinen, die mit herabhängenden Beinen bäuchlings auf einer Auflagerung liegend immobilisiert sind, mit mindestens einer Elektrode, die zur Anlage im Brustbereich des jeweils zu betäubenden Schlachttiers bestimmt ist und in die Auflagerung inkorporiert ist. Eine derartige Vorrichtung ist aus EP-A-561 470, insbesondere Anspruch 24 und Spalte 3, Zeilen 50 bis 53, bekannt.

Die Erfindung bezieht sich, nach einem zweiten Aspekt, auf eine Vorrichtung zum elektrischen Betäuben von Schlachttieren, insbesondere Schweinen, die mit herabhängenden Beinen bäuchlings auf einer während des Betäubens transportierenden Auflagerung liegend immobilisiert sind, mit mindestens einer Elektrode, die zur Anlage im Brustbereich des jeweils zu betäubenden Schlachttiers bestimmt ist und - in Draufsicht - neben der Auflagerung angeordnet ist, wobei die Elektrode entsprechend der Transportierbewegung der Auflagerung bewegbar ist. Eine derartige Vorrichtung ist ebenfalls aus EP-A-561 470 bekannt.

Schlachttiere werden heutzutage meistens im immobilisierten Zustand betäubt, insbesondere weil sich in diesem Zustand die Elektroden, mit denen die Betäubungsspannung auf das jeweilige Schlachttier aufgebracht wird, sicherer und bequemer ansetzen lassen und weil nur mit immobilisierten Schlachttieren eine mehr oder weniger weitgehend automatisierte, elektrische Betäubung möglich ist.

Es sind mehrere Arten der Immobilisierung von Schlachttieren bekannt, unter diesen die Immobilisierung, bei der die Schlachttiere mit herabhängenden Beinen bäuchlings auf einer Auflagerung liegen; bei dieser Art der Immobilisierung machen die Schlachttiere einen ruhigeren, weniger gestressten Eindruck als bei einigen anderen Arten der Immobilisierung.

Ferner hat man erkannt, daß im Zusammenhang mit der Schlachttierbetäubung bzw. anschließend an die eigentliche Betäubung ein Stromdurchgang durch das Herz des betreffenden Schlachttiers günstig ist. Durch diesen Stromdurchgang wird in der Regel Herzkammerflimmern erzeugt. Das nachfolgende Abstechen der Schlachttiere gestaltet sich ruhiger und gefahrloser. Die normalerweise zumindest zum Teil vor dem Stromdurchfluß durch das Herz erfolgende Betäubung mittels Stromdurchgangs durch das Gehirn muß nicht mehr als so tiefe Betäubung ausgeführt werden. Insgesamt ist das geschilderte Vorgehen, bei dem mit Stromdurchgang durch das Herz gearbeitet wird, besonders tierschutzgerecht und führt zu einer deutlichen Verringerung von Schlachtschäden, wie Blutstippenbildung im Fleisch und Knochenbrüche durch Verspannung.

Wenn ein zu betäubendes Schlachttier in der beschriebenen Weise auf einer Auflagerung liegend immobilisiert ist und mindestens eine Elektrode im Brustbereich angesetzt werden soll, sieht man sich Problemen gegenüber, weil der Brustbereich wegen des Aufliegens des Schlachttiers auf der Auflagerung kaum oder nur in Randbereichen, welche der Schlachttierseite zuzurechnen sind, zugänglich ist. Bei einer bekannten Vorrichtung der eingangs genannten Art wird deshalb die betreffende Elektrode von der Seite her gegen den in die Tierseite übergehenden Randbereich der Schlachttierbrust zur Anlage gebracht. Diese Stelle ist zwar einigermaßen gut zugänglich, erfordert jedoch eine aufwendige Konstruktion der Elektrodenhalterung.

Der Erfindung liegt die Aufgabe zugrunde, eine Vorrichtung der eingangs genannten Art mit einer Elektrodenplazierung verfügbar zu machen, die räumlich günstiger und von der Erreichung einer sicheren Elektrodenanlage her besonders funktionell ist.

Nach einer ersten erfindungsgemäßen Lösung dieser Aufgabe ist die Vorrichtung dadurch gekennzeichnet, daß die Elektrode zwischen einer ersten Stellung, in der sie von der Auflagerung vorsteht, und einer zweiten Stellung bewegbar ist, in der sie weniger von der Auflagerung vorsteht als in der ersten Stellung oder in die Auflagerung zurückgezogen ist.

Gemäß dieser erfindungsgemäßen Lösung befindet sich die Elektrode von Haus aus an einer Steile, an weicher der Brustbereich des betreffenden Schlachttiers unmittelbar dargeboten wird. In einer Stellung, in der die Elektrode von der Auflagerung vorsteht, ist besonders sicherer Kontakt mit dem Brustbereich des betreffenden Schlachttiers möglich.

Nach einer zweiten Lösung der weiter vom angegebenen Aufgabe ist die Vorrichtung erfindungsgemäß dadurch gekennzeichnet, daß die Elektrode zwischen einer oberen ersten Stellung und einer unteren zweiten Stellung im wesentlichen in einer Vertikalebene bewegbar ist. Vorzugsweise reicht die Elektrode in der oberen ersten Stellung höher hinauf als die Oberseite der Auflagerung. Vorzugsweise ist die Elektrode in der unteren zweiten Stellung mindestens bis zur Höhe der Oberseite der Auflagerung zurückgezogen.

Gemäß dieser erfindungsgemäßen Lösung befindet sich die Elektrode ebenfalls in einer Stellung, in der sie besonders direkt im Brustbereich des betreffenden Schlachttiers zur Anlage bringbar ist. Da die Elektrode seitlich neben der Auflagerung angeordnet ist, hat man mehr Freiheit der konstruktiven Ausbildung als bei der Inkorporation in die Auflagerung.

Aus der DE-C-43 20 966 ist eine Vorrichtung zum elektrischen Betäuben von Schweinen bekannt, bei der eine Brustelektrode in Schrägrichtung nach schräg-oben zur Anlage im Brustbereich des Schweins ausgefahren wird. Das Schwein wird während des Betäubens nicht transportiert, und es ist nicht möglich, die Brustelektrode entsprechend einer Transportierbewegung des Schweins mitzubewegen.

In der vorliegenden Anmeldung wird von einer Vorrichtung zum elektrischen Betäuben von Schlachttieren gesprochen, obwohl - wie weiter vorn bereits angesprochen - der mittels der Elektrode bewirkte Stromdurchgang durch das Herz des betreffenden Schlachttiers in den meisten Fällen strenggenommen nicht der Herbeiführung einer Betäubung des Schlachttiers dient, sondern der Herbeiführung von Herzkammerflimmern. Die verwendete Ausdrucksweise wurde dennoch gewählt, weil in der Vorrichtung normalerweise eine Betäubung im engeren Sinn mittels Stromdurchgang durch das Gehirn stattfindet und weil man im eingebürgerten Sprachgebrauch auch das Anliegen der Elektrode im Brustbereich des betreffenden Schlachttiers und das Strombeaufschlagen mit Hilfe dieser Elektrode noch dem Schlachttierbetäuben im weiteren Sinn zurechnet.

Ferner wird darauf hingewiesen, daß der Begriff "Brustbereich des Schlachttiers" im Zusammenhang mit der Erfindung sehr umfassend zu verstehen ist. Der Begriff "Brustbereich" soll auch die Tierseiten im vorderen Rumpfbereich mit umfassen, und auch den vorderen Übergang von der Brust (im engeren Sinne) zu dem Schulterbereich, insbesondere aber auch den Bereich der Achselhöhle einschließlich des vorderen Zugangs vom Schulterbereich her und des hinteren Zugangs vom Seitenbereich her, wie weiter unten noch deutlicher werden wird.

Die erfindungsgemäße Bewegbarkeit der Elektrode ist vorzugsweise eine schwenkende Bewegbarkeit oder eine translatorische Bewegbarkeit. Diese Bewegbarkeiten sind konstruktiv besonders unkompliziert zu bewältigen. Andere Bewegbarkeiten sind jedoch möglich, da es funktionell nur auf das Vorhandensein von erster Stellung und zweiter Stellung ankommt.

In bevorzugter Ausgestaltung der Erfindung ist die erste Stellung (d. h. "weiter vorstehende Stellung" bzw. "weiter hinaufreichende Stellung") die Ruhestellung und die zweite Stellung die Arbeitsstellung der Elektrode, wobei die Elektrode durch ein auf der Auflagerung befindliches Schlachttier in die zweite Stellung bewegbar ist, vorzugsweise gegen Federkraft.

Diese Ausgestaltung läuft darauf hinaus, daß das Schlachttier selbst, z. B. durch den Aufliegevorgang oder durch eine Heranförderbewegung, die Elektrode in die Arbeitsstellung bringt. Die von dem betreffenden Schlachttier verursachte Elektrodenbewegung kann, muß aber nicht, zum Einschalten des durch die Elektrode gehenden Stromflusses genutzt werden. Eine Bewegung in die zweite Stellung gegen Federkraft führt dazu, daß die Elektrode in vorteilhafter Weise gut angepreßt gegen das betreffende Schlachttier gehalten wird.

Alternativ ist in bevorzugter Ausgestaltung der Erfindung vorgesehen, daß die zweite Stellung die Ruhestellung und die erste Stellung und Arbeitsstellung der Elektrode ist; und daß die Elektrode durch einen Antrieb in die erste Stellung bewegbar ist, vorzugsweise durch eine Zylinder-Kolben-Einheit.

Diese bevorzugte Weiterbildung der Erfindung läuft darauf hinaus, daß die Elektrode aktiv in die erste Stellung (d. h. "weiter vorstehende Stellung" bzw. "höher hinaufreichende Stellung") bewegt wird. Dabei ist es günstig, wenn die erste Stellung nicht eine konkret und unveränderlich festgelegte Stellung ist, sondern z. B. in Abhängigkeit von dem jeweiligen Schlachttier dann erreicht ist, wenn mit dem Antrieb ein bestimmter Anpreß-Schwellenwert der Elektrode an das Schlachttier erreicht ist.

Die Auflagerung kann vorzugsweise ein Aufliege-Transportband für geschlossenen Umlauf sein. Alternativ kann die Auflagerung vorzugsweise ein zur Immobilisierung anhebbarer Aufliege-Balken sein, wobei dieser z. B. in einer Betäubungsfalle anhebbar und danach absenkbar ist oder z. B. in seiner Längsrichtung verfahrbar ist, um ein Schlachttier von einem Zugangsweg in eine Betäubungsfalle zu transportieren.

Wenn die Auflagerung ein Transporteur zum Transportieren einzelner oder einer Reihe mehrerer Schlachttiere gleichzeitig ist, kann man, wie bevorzugt, die Elektrode auf einem Wagen anordnen, der synchron mit der Auflagerung bewegbar ist, vorzugsweise durch einen zugeordneten Antrieb. Alternativ kann man den Transporteur jeweils für eine Zeitphase anhalten, in der die Elektrode zur Anlage an ein Schlachttier gebracht wird und dann der Strom eingeschaltet wird. Es gibt aber auch andere Fälle, in denen ein Mitbewegen der Elektrode entbehrlich oder unsinnig ist, insbesondere im Fall des vorstehend geschilderten Aufliege-Balkens.

Vorzugsweise ist die Elektrode derart ausgebildet und positioniert, daß sie in ihrer Arbeitsstellung in der Gegend einer Achselhöhle oder des (vorderen oder hinteren) Zugangs zu einer Achselhöhle des zu betäubenden Schlachttiers anliegt. Diese Gegenden des Schlachttiers sind bisher praktisch noch nicht für die Elektrodenanlage in Betracht gezogen worden. Im Zusammenhang mit der Erfindung werden diese Gegenden jedoch als besonders günstig angesehen, weil sie aufgrund der Erfindung recht gut für die Elektrode zugänglich sind, weil dort in aller Regel die Haut der Schlachttiere relativ dünn ist, und weil schließlich dort die Schlachttierbehaarung normalerweise nicht besonders massiv ist.

Nach einer besonders bevorzugten Ausgestaltung der Erfindung ist nicht nur eine Elektrode zur Anlage im Brustbereich des jeweiligen Schlachttiers vorgesehen, sondern zwei derartige Elektroden, die quer zu der Längsrichtung der Auflagerung voneinander beabstandet sind. Auch die zweite Elektrode kann einzelne oder mehrere der in der vorliegenden Anmeldung beschriebenen Weiterbildungsmerkmale aufweisen. Vorzugsweise sind die beiden Elektroden analog zueinander ausgebildet, angeordnet, antreibbar und dergleichen, so daß, wenn eine Elektrode ein bestimmtes Weiterbildungsmerkmal verwirklicht, auch die andere Elektrode dieses Weiterbildungsmerkmal verwirklicht.

Es wird darauf hingewiesen, daß die Vorrichtung vorzugsweise zusätzlich Elektroden zur Anlage im Kopfbereich des jeweils zu betäubenden Schlachttiers aufweist, so daß die Betäubung zunächst mit Stromfluß durch das Gehirn des Schlachttiers eingeleitet werden kann und später der Betäubungsvorgang mit Stromdurchfluß durch das Herz des betreffenden Schlachttiers fortgesetzt werden bzw. Herzkammerflimmern erzeugt werden kann. Hierbei wird in der Regel mit höherer Spannung, insbesondere im Bereich 200 bis 300 V, für den Stromdurchgang durch das Gehirn und mit einer niedrigeren Spannung, insbesondere im Bereich 80 bis 160 V, für den Stromdurchgang durch das Herz gearbeitet.

Es wird ferner darauf hingewiesen, daß es günstig ist, mit der linken Brustelektrode möglichst nah am Herzen des Schlachttiers anzusetzen. Je unmittelbarer der Strom durch das Herz geht, desto niedriger kann er gewählt werden.

Die Erfindung und Weiterbildungen der Erfindung werden nachfolgend anhand von zeicherenisch dargestellten Ausführungsbeispielen noch näher erläutert. Es zeigt:
- Fig. 1: eine Betäubungsvorrichtung mit Aufliege-Transportband in Seitenansicht;
- Fig. 2: einen Elektrodenwagen der Vorrichtung von Fig. 1, in Seitenansicht und in größerem Maßstab;
- Fig. 3: das Aufliege-Transportband und den Elektrodenwagen von Fig. 1 im Querschnitt bzw. Frontalansicht gemäß III-III in Fig. 1, im vergrößertem Maßstab;
- Fig. 4: von einer Betäubungsvorrichtung einen Aufliege-Balken in Seitenansicht;
- Fig. 5: einen Ausschnitt des Aufliege-Balkens von Fig. 4 im Querschnitt längs V-V in Fig. 4;
- Fig. 6: einen Aufliege-Balken analog zu Fig. 4, aber mit anderer Ausbildung der Bewegbarkeit der Elektroden.

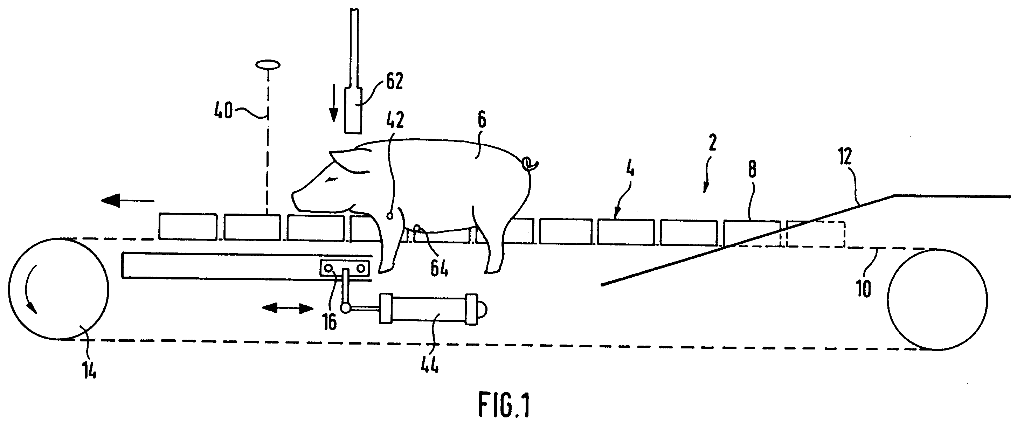

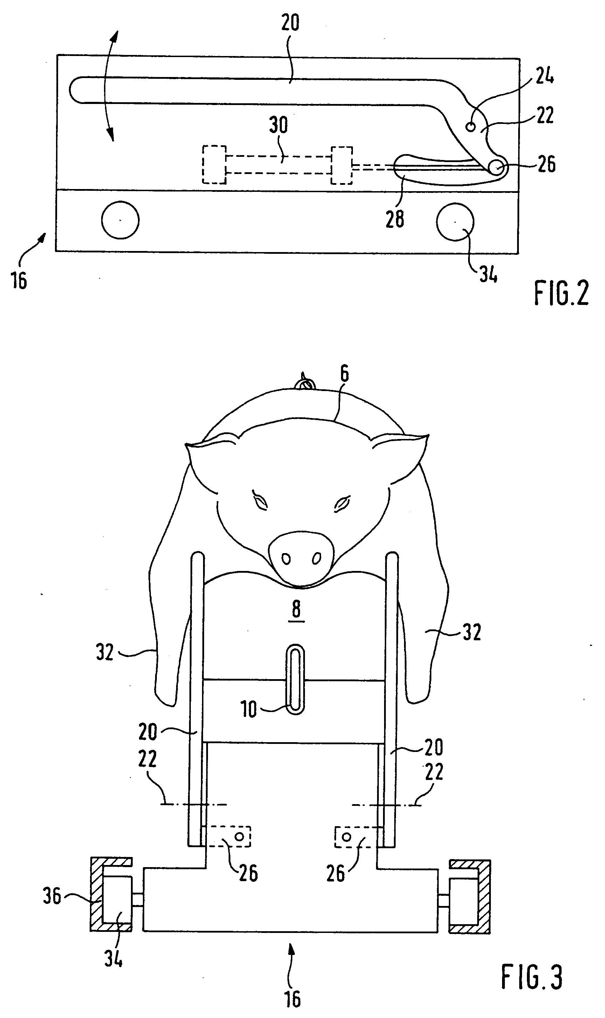

Die Betäubungsvorrichtung 2 von Fig. 1 weist als ersten Kernbestandteil ein Aufliege-Transportband 4 mit geschlossener Umlaufbahn auf. Fig. 3 veranschaulicht, wie Schlachttiere 6, hier ein Schwein, auf der Oberseite einer Reihe von Blöcken 8, z. B. aus Kunststoff, welche auf einer Kette 10 befestigt das Aufliege-Transportband bilden, bäuchlings liegend immobilisiert sind, d. h. sich aus eigener Kraft nicht von dem Aufliege-Transportband herunterbewegen können. Die Schweine 6 gelangen der Reihe nach dadurch auf das Aufliege-Transportband 4, daß sie einen abschüssigen Boden 10 hinunterlaufen, der einen mittigen Längsschlitz aufweist, durch den die endlose Reihe der Blöcke 8 herauskommt. Sobald die Schweine 6 den Boden 10 so weit heruntergelaufen sind, daß die Blöcke 8 unter ihre Bauchseite greifen, verlieren sie den Boden unter den Füßen und sind dann mit frei herabhängenden Beinen auf dem Aufliege-Transportband 4 immobilisiert. Eines der beiden Umlenk-Kettenräder 14 des Transportbands 4 ist angetrieben. Am in Fig. 1 linken Ende des Transportbands 4 werden die Schweine 6 der Reihe nach im betäubten Zustand z. B. auf ein nicht eingezeichnetes Plattenband abgegeben, auf dem sie horizontal liegend rechtwinklig zur Zeichnungsebene der Fig. 1 weitergefördert und dabei abgestochen werden. Aufliege-Transportbänder der beschriebenen Art sind bekannt, auch im Zusammenhang mit der elektrischen Betäubung von Schlachttieren.

In Fig. 1 ist ferner schematisiert ein Wagen 16 angedeutet, der in Längsrichtung des Aufliege-Transportbands 4 vorwärts und rückwärts verfahrbar ist und der zwei Elektroden 20 trägt, die in Fig. 1 zum Erhalt der Übersichtlichkeit nicht mit eingezeichnet sind.

Die Ausbildung und Anordnung der zwei Elektroden 20 ist aus Figuren 2 und 3 gut erkennbar. Die zwei Elektroden 20 sind gleich ausgebildet und haben analoge Funktion, so daß es reicht, die Beschreibung anhand einer Elektrode 20 vorzunehmen. Die betrachtete Elektrode 20 hat im wesentlichen stangenförmige Gestalt mit einem nach unten abgebogenen, hinteren Endbereich 22. In dem abgebogenen Endbereich 22 ist die Elektrode 20 um eine waagerechte Achse 24 schwenkbar an dem Wagen 16 gelagert. Wie man gut in Fig. 3 sieht, ist der Wagen 16 in seinem oberen Bereich in etwa so breit wie die Blöcke 8 des Aufliege-Transportbands 4 und befindet sich knapp unterhalb des oberen Trums des Transportbands 4. Eine Elektrode 20 ist an der linken Seite dieses oberen Bereichs des Wagens 16 vorgesehen, und die andere Elektrode 20 ist an der rechten Seite dieses oberen Bereichs des Wagens 16 vorgesehen. An ihrem unteren hinteren Ende weist die betrachtete Elektrode 20 einen Querzapfen 26 auf, der durch einen Schlitz 28 in der Seitenwand des oberen Bereichs des Wagens 16 in das Innere des Wagens 16 ragt. An den Zapfen 26 ist eine in Längsrichtung des Wagens 16 liegende, pneumatische Zylinder-Kolben-Einheit 30 angeschlossen. Im Zustand der Fig. 2 hat der Hauptteil der Elektrode 20 eine horizontale Lage. Wenn die Zylinder-Kolben-Einheit 30 zusammengezogen wird, wird die Elektrode 20 im Uhrzeigersinn um z. B. 40 bis 90° geschwenkt, so daß sie höher hinaufreicht als die Oberseite der Blöcke 8, s. Fig. 3. Die beiden Elektroden 20 sind spiegelbildlich vorgesehen, und es versteht sich, daß für jede Elektrode 20 eine Zylinder-Kolben-Einheit 30 vorgesehen ist.

In Fig. 3 ist deutlich zu sehen, daß die betrachtete Elektrode 20 ihre Schwenkbewegung in einer Vertikalebene vollzieht, die sich zwischen der seitlichen Begrenzung des Blocks 8 und dem davon ein Stück beabstandet herabhängenden Vorderbein 32 des betreffenden Schweins 6 befindet. Falls erforderlich, kann man diesen Abstand gezielt dadurch vergrößern, daß der Wagen 16 eine Abweiserfläche zum leicht nach außen Verlagern des betreffenden Vorderbeins 32 aufweist. Wenn die betrachtete Elektrode 20 im Uhrzeigersinn der Fig. 2 nach oben geschwenkt wird, kommt sie irgendwann mit ihrem oberen Endbereich zur Anlage an das betreffende Schwein 6, und zwar im Bereich des vorderen bzw. schulterseitigen Zugangs zur Achselhöhle des betreffenden Schweins 6. Die der Elektrode 20 zugeordnete Zylinder-Kolben-Einheit 30 kann entweder so gesteuert sein, daß sie die Elektrode 20 um einen vorgegebenen Winkel schwenkt, und/oder so gesteuert sein, daß sie die Elektrode 20 so lange weiterschwenkt, bis eine vorgegebene Anpreßkraft des oberen Elektrodenbereichs an das Schwein 6 erreicht ist.

In seinem unteren Bereich, wo er nicht mehr mit den Beinen 32 von Schweinen 6 kollidieren kann, ist der Wagen 16 verbreitert und mit seitlich vorstehenden, drehbaren Rollen 34 versehen. Die Rollen 34 laufen in Schienen 36, die einen U-förmigen, seitlich offenen Querschnitt besitzen. Die Schienen 36 verlaufen parallel zu dem oberen Trum des Transportbands 4 in dessen Längsrichtung.

An einer bestimmten Stelle längs der Bewegungsstrecke des oberen Trums des Transportbands 4 befindet sich einen Lichtschranke 40 oder ein Lichtvorhang. Wenn ein Schwein 6 mit seiner Schnauze die Lichtschranke 40 erreicht, stellt dies eine hinreichend genaue Information dafür dar, daß sich die Achselhöhlen 42 dieses Schweins 6 an einer bestimmten Stelle längs der Bewegungsbahn des Transportbands 4 befinden. Zu dieser Zeit befindet sich der Wagen 16 in einer Ruheposition, die zu der Position der Achselhöhlen 42 im noch genauer zu beschreibenden Sinn paßt. Jetzt wird von der Steuerung der Betäubungsvorrichtung 2 ein Befehl an einen Verfahrantrieb, vorzugsweise in Gestalt einer Zylinder-Kolben-Einheit 44, des Wagens 16 gegeben und werden praktisch gleichzeitig (könnte auch zeitlich kurz davor oder kurz danach sein) die beiden Zylinder-Kolben-Einheiten 30 für die beiden Elektroden 20 aktiviert. Die angesprochene Ruheposition des Wagens 16 und der zeitliche Ablauf sind so aufeinander abgestimmt, daß die Elektroden 20 nach ihrer Schwenkbewegung mit dem Achselhöhlenbereich 42 des betreffenden Schweins in Anlage sind und daß sich der Wagen 16 synchron mit dem oberen Trum des Transportbands 4 bewegt. Kurze Zeit, nachdem die Elektroden 20 in angepreßte Anlage an das Schwein 6 gekommen sind, wird elektrische Spannung auf die Elektroden 20 gegeben. Ein elektrischer Strom fließt auf optimal kurzem Weg durch den Schweinekörper, aber durch den Herzbereich des Schweins. Diesen Strom läßt man einige Sekunden fließen, dann werden die Elektroden 20 in die in Fig. 2 gezeichnete Lage zurückgeschwenkt und wird der Wagen 16 aus seiner angetriebenen Vorwärtsbewegung angehalten. Danach leistet die Zylinder-Kolben-Einheit 44 eine rasche Zurückbewegung des Wagens 16 in seine beschriebene Ruhestellung. Der beschriebene Zyklus wiederholt sich mit dem nächsten Schwein 6.

Es ist leicht ersichtlich, daß statt der Schwenkbewegbarkeit der Elektroden 20 eine translatorische Ausfahrbarkeit z. B. in Richtung nach schräg-hinten-oben mittels einer Zylinder-Kolben-Einheit vorgesehen sein kann.

Bei dem bisher beschriebenen Ausführungsbeispiel war die ausgeschwenkte Elektrodenstellung die Arbeitsstellung, in der dann Strom eingeschaltet wurde. Man kann jedoch die Konstruktion auch gleichsam umgekehrt vorsehen, indem man z. B. statt der Zylinder-Kolben-Einheit 30 eine Zugfeder einbaut, welche die Elektrode 20 normalerweise in einer nach oben fortragenden Stellung hält. Ein auf dem Transportband 4 ankommendes Schwein 6 kann die betreffende Elektrode 20 gegen den Uhrzeigersinn schwenkend nach vorn-unten mitnehmen, wobei sich wegen der Zugfeder eine Anpreßkraft zwischen der Elektrode und dem Schwein aufbaut. Nach Erreichen einer Anpreßkraft hinreichender Größe wird der Verfahrantrieb des Wagens 16 aktiviert. In diesem Fall ist also die weniger hoch hinaufreichende Stellung der Elektrode 20 die Arbeitsstellung, in der Strom zugeführt wird.

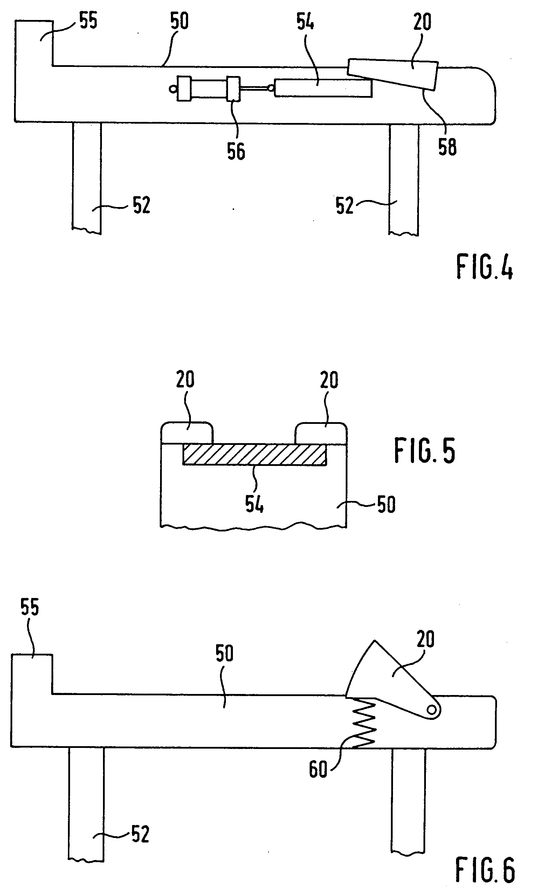

Beim Ausführungsbeispiel gemäß Fig. 4 wird die Auflagerung für das zu betäubende Schlachttier durch einen Aufliege-Balken 50 gebildet. Ein Schlachttier, welches mit herabhängenden Beinen bäuchlings auf der Oberseite des Aufliege-Balkens 50 liegt, befindet sich in einem immobilisierten Zustand, wobei sich das Schwein mit seiner Längsrichtung in Längsrichtung des Aufliege-Balkens 50 erstreckt. In den meisten Fällen ist es sinnvoll, den z. B. auf vertikalen Säulen 52 abgestützten Aufliege-Balken 50 in Vertikalrichtung anhebbar und absenkbar zu machen, vorzugsweise mittels einer nicht eingezeichneten Zylinder-Kolben-Einheit. Dann kann man z. B. den Aufliege-Balken 50 unter einem Schwein anheben und dieses Schwein durch Nach-oben-Tragen immobilisieren. Außerdem ist es möglich, den Aufliege-Balken 50 mittels eines Antriebs in seiner Längsrichtung verfahrbar zu machen, vorzugsweise um ein darauf immobilisiertes Schlachttier besonders tierschonend in eine Betäubungsfalle einzubringen. In Fig. 4 erkennt man ferner im, hinteren Endbereich des Aufliege-Balkens 50 einen nach oben ragenden Höcker 55. Wenn man den Aufliege-Balken in einer Position anhebt, in der das betreffende Schlachttier mit seinem Pobereich gegen den Höcker 55 anliegt, hat man eine definierte Lage des Schlachttiers in Längsrichtung des Aufliege-Balkens 50.

Am anschaulichsten sieht man in Fig. 5, daß in der Oberseite des Aufliege-Balkens 50 zwei Elektroden 20 eingelassen sind, und zwar eine Elektrode 20 benachbart dem linken Rand des Balkens 50 und eine Elektrode 20 benachbart dem rechten Rand des Balkens 50. Beide Elektroden 20 verlaufen in Längsrichtung des Balkens 50 und sind an einer derartigen Stelle und in einer derartigen Länge vorgesehen, daß ein Schlachttier üblicher Länge mit seinem Brustbereich auf die Elektroden 20 zu liegen kommt.

In Fig. 4 sieht man, daß mittels eines für beide Elektroden 20 gemeinsamen Betätigungsstücks 54, das durch eine Zylinder-Kolben-Einheit 56 angetrieben verfahrbar ist, die beiden Elektroden translatorisch nach oben anhebbar sind. Aufgrund einer Schrägfläche 58 unten an der betreffenden Elektrode 20 und/oder oben an dem Betätigungsstuck 54 ergibt sich eine Verstärkung der Kraft, mit der die Elektroden 20 beim Ausfahren nach oben gegen den Brustbereich eines aufliegenden Schlachttiers gepreßt werden.

In Fig. 6 ist wiederum eine "umgekehrte Alternative" veranschaulicht. Statt der translatorisch bewegbaren Elektroden der Ausführungsform von Figuren 4 und 5 sind zwei schwenkend bewegbare Elektroden 20 vorgesehen, die jedoch nach Länge und Positionierung den Elektroden 20 des vorherigen Ausführungsbeispiels gleichen. Jede schwenkbare Elektrode 20 ist durch eine Druckfeder 60 in Richtung maximalen Vorstehens von der Oberseite des Aufliege-Balkens 50 vorgespannt. Wenn ein Schlachttier auf den Aufliege-Balken 50 zu liegen kommt, wird die betreffende Elektrode 20 gegen den Uhrzeigersinn verschwenkt, und aufgrund des Zusammendrückens der Feder 60 bildet sich eine gewünschte Anpreßkraft der Elektrode 20 gegen den Brustbereich des betreffenden Schlachttiers aus.

In Fig. 1 ist ferner angedeutet, wie man z.B. von Hand ein Kopfelektrodenpaar 62 von oben her auf den Kopfbereich des Schweins 6 absenken kann, um eine Hirnbetäubung durchzuführen. Alternativ kann das Kopfelektrodenpaar 62 auch an einem oberen Wagen angebracht sein, der analog dem unteren Wagen 16 verfahrbar ist.

Schließlich ist in Fig. 1 mit "64" diejenige Stelle des Brustbereichs des Schweins 6 markiert, die dem Herzen am dichtesten benachbart ist. Erfindungsgemäß kommt auch diese Stelle 64 für eine Anlage der Elektrode 20 in Betracht. Hierzu kann man sich z.B. Elektroden 20 wie bei Fig. 3 vorstellen, die allerdings zeitlich später bzw. weiter hinten am Schwein nach oben geschwenkt werden. In diesem Fall müssen die Elektroden 20 in ihrer Arbeitsstellung nicht unbedingt höher hinaufreichen als die Oberseite der Auflagerung, weil gerade in diesem Körperbereich des Schweins 6 das Körpergewebe rechts und links des Blocks 8 ein Stück herunterhängt. Insofern könnte man in Anspruch 2 statt "höher hinaufreicht als die Oberseite der Auflagerung" besser und umfassender von einer "oberen ersten Stellung" und einer "unteren zweiten Stellung" sprechen.

## Patentansprüche

1. Vorrichtung zum elektrischen Betäuben von Schlachttieren (6), insbesondere Schweinen, die mit herabhängenden Beinen (32) bäuchlings auf einer Auflagerung (50) liegend immobilisiert sind, mit mindestens einer Elektrode (20), die zur Anlage im Brustbereich des jeweils zu betäubenden Schlachttiers (6) bestimmt ist und in die Auflagerung (50) inkorporiert ist,
dadurch gekennzeichnet,
daß die Elektrode (20) zwischen einer ersten Stellung, in der sie von der Auflagerung (50) vorsteht, und einer zweiten Stellung bewegbar ist, in der sie weniger von der Auflagerung vorsteht als in der ersten Stellung oder in die Auflagerung (50) zurückgezogen ist.

2. Vorrichtung zum elektrischen Betäuben von Schlachttieren (6), insbesondere Schweinen, die mit herabhängenden Beinen (32) bäuchlings auf einer während des Betäubens transportierenden Auflagerung (4) liegend immobilisiert sind, mit mindestens einer Elektrode (20), die zur Anlage im Brustbereich des jeweils zu betäubenden Schlachttiers (6) bestimmt ist und - in Draufsicht - neben der Auflagerung (4) angeordnet ist, wobei die Elektrode (20) entsprechend der Transportierbewegung der Auflagerung (4) bewegbar ist
dadurch gekennzeichnet,
daß die Elektrode (20) zwischen einer oberen ersten Stellung und einer unteren zweiten Stellung im wesentlichen in einer Vertikalebene bewegbar ist.

3. Vorrichtung nach Anspruch 1 oder 2,
dadurch gekennzeichnet,
daß die Bewegbarkeit der Elektrode (20) eine schwenkende Bewegbarkeit ist.

4. Vorrichtung nach Anspruch 1 oder 2,
dadurch gekennzeichnet, daß die Bewegbarkeit der Elektrode (20) eine translatorische Bewegbarkeit ist.

5. Vorrichtung nach mindestens einem der Ansprüche 1 bis 4,
dadurch gekennzeichnet,
daß die erste Stellung die Ruhestellung und die zweite Stellung die Arbeitsstellung der Elektrode (20) ist;
und daß die Elektrode (20) durch ein auf der Auflagerung (4; 50) befindliches Schlachttier (6) in die zweite Stellung bewegbar ist, vorzugsweise gegen Federkraft.

6. Vorrichtung nach mindestens einem der Ansprüche 1 bis 4,
dadurch gekennzeichnet,
daß die zweite Stellung die Ruhestellung und die erste Stellung die Arbeitsstellung der Elektrode (20) ist;
und daß die Elektrode (20) durch einen Antrieb (30; 56) in die erste Stellung bewegbar ist, vorzugsweise durch eine Zylinder-Kolben-Einheit.

7. Vorrichtung nach mindestens einem der Ansprüche 1 bis 6,
dadurch gekennzeichnet,
daß die Auflagerung ein Aufliege-Transportband (4) für geschlossenen Umlauf ist.

8. Vorrichtung nach mindestens einem der Ansprüche 1 bis 6,
dadurch gekennzeichnet,
daß die Auflagerung ein zur Immobilisierung anhebbarer Aufliege-Balken (50) ist.

9. Vorrichtung nach mindestens einem der Ansprüche 2 bis 8,
dadurch gekennzeichnet,
daß die Elektrode (20) auf einem Wagen (16) angeordnet ist, der synchron mit der Auflagerung (4; 50) bewegbar ist, vorzugsweise durch einen zugeordneten Antrieb (44).

10. Vorrichtung nach mindestens einem der Ansprüche 1 bis 9,
dadurch gekennzeichnet,
daß die Elektrode (20) derart ausgebildet und positioniert ist, daß sie in ihrer Arbeitsstellung in der Gegend einer Achselhöhle (42) oder des Zugangs zu einer Achselhöhle (42) des zu betäubenden Schlachttiers (6) anliegt.

11. Vorrichtung nach mindestens einem der Ansprüche 1 bis 10,
dadurch gekennzeichnet,
daß zwei Elektroden (20) vorgesehen sind, die quer zu der Längsrichtung der Auflagerung (4; 50) beabstandet und zur Anlage im Brustbereich des jeweils zu betäubenden Schlachttiers (6) bestimmt sind.

12. Vorrichtung nach mindestens einem der Ansprüche 2 bis 11,
dadurch gekennzeichnet,
daß die Elektrode (20) in ihrer oberen ersten Stellung höher hinaufreicht als die Oberseite der Auflagerung (4; 50).

## Claims

1. An apparatus for electrically stunning animals (6) for slaughter, in particular hogs, which are immobilized lying with their bellies on a support (50) with the legs (32) depending, comprising at least one electrode (20) which is intended for abutment in the breast region of the respective animal (6) for slaughter to be stunned and which is incorporated in the support (50),
characterized in that the electrode (20) is movable between a first position, in which it projects from the support (50), and a second position, in which it projects less from the support than in the first position or is retracted into the support (40).

2. An apparatus for electrically stunning animals (6) for slaughter, in particular hogs, which are immobilized lying with their bellies on a support (4) with the legs (32) depending, said support being conveyed during stunning, comprising at least one electrode (20) which is intended for abutment in the breast region of the respective animal (6) for slaughter to be stunned and which - as seen in a plan view - is disposed beside the support (4), said electrode (20) being adapted to be moved in accordance with the conveying motion of the support (4),
characterized in that the electrode (20) is movable between an upper, first position and a lower, second position substantially in a vertical plane.

3. The apparatus of claim 1 or 2,
characterized in that the movability of the electrode (20) is a pivotal movability.

4. The apparatus of claim 1 or 2,
characterized in that the movability of the electrode (20) is a translatory movability.

5. The apparatus of at least one of claims 1 to 4,
characterized in that the first position is the resting position and the second position is the working position of the electrode (20);
and in that the electrode (20) is adapted to be moved to the second position, preferably against spring force, by an animal (6) for slaughter being located on the support (4; 50).

6. The apparatus of at least one of claims 1 to 4,
characterized in that the second position is the resting position and the first position is the working position of the electrode (20);
and in that the electrode (20) is movable to the first position by a drive (30; 56), preferably by a cylinder and piston unit.

7. The apparatus of at least one of claims 1 to 6,
characterized in that the support is a supporting-type conveyor belt (4) for closed loop-type circulation.

8. The apparatus of at least one of claims 1 to 6,
characterized in that the support is a supporting-type beam (50) that is adapted to be lifted for immobilization.

9. The apparatus of at least one of claims 2 to 8,
characterized in that the electrode (20) is disposed on a carriage (16) movable in synchronism with the support (4; 50), preferably by an associated drive (44).

10. The apparatus of at least one of claims 1 to 9,
characterized in that the electrode (20) is designed and positioned such that, in the working position thereof, it abuts in the region of an axilla (42) or the access to an axilla (42) of the animal (6) for slaughter to be stunned.

11. The apparatus of at least one of claims 1 to 10,
characterized in that two electrodes (20) are provided which are spaced transversely of the longitudinal direction of the support (4; 50) and are intended for abutment in the breast region of the respective animal (6) for slaughter to be stunned.

12. The apparatus of at least one of claims 2 to 11,
characterized in that the electrode (20) in its upper, first position extends to a higher location than the top side of the support (4; 50).

## Revendications

1. Dispositif pour anesthésier électriquement des animaux d'abattage (6), notamment des porcs, qui sont immobilisés couchés à plat ventre, les pattes (32) pendantes, sur un support (50), avec au moins une électrode (20) adaptée pour s'appliquer contre la zone de poitrine de l'animal d'abattage (6) à anesthésier et incorporée au support (50),
caractérisé en ce que
l'électrode (20) est mobile entre une première position dans laquelle elle dépasse du support (50) et une seconde position dans laquelle elle dépasse moins du support que dans la première position ou est rétractée dans le support (50).

2. Dispositif pour anesthésier électriquement des animaux d'abattage (6), notamment des porcs, qui sont immobilisés couchés à plat ventre, les pattes (32) pendantes, sur un support de transport (4), comportant au moins une électrode (20) adaptée pour s'appliquer contre la zone de poitrine de l'animal d'abattage (6) à anesthésier et disposée -en vue de dessus- à côté du support (4), l'électrode (20) étant déplaçable conformément au mouvement de transport du support (4),
caractérisé en ce que
l'électrode (20) est mobile essentiellement dans un plan vertical entre une première position supérieure et une seconde position inférieure.

3. Dispositif selon la revendication 1 ou 2,
caractérisé en ce que
la mobilité de l'électrode (20) est une mobilité d'oscillation.

4. Dispositif selon la revendication 1 ou 2,
caractérisé en ce que
la mobilité de l'électrode (20) est une mobilité de translation.

5. Dispositif selon l'une au moins des revendications 1 à 4,
caractérisé en ce que
la première position est la position de repos et la seconde position est la position de travail de l'électrode (20),
et en ce que l'électrode (20) est déplaçable dans la seconde position par l'animal d'abattage (6) se trouvant sur le support (4;50), de préférence contre l'effet d'un ressort.

6. Dispositif selon l'une au moins des revendications 1 à 4,
caractérisé en ce que
la seconde position est la position de repos et la première position est la position de travail de l'électrode (20),
et que l'électrode (20) est déplaçable dans la première position par un entraînement (30; 56), de préférence par une unité à piston et cylindre.

7. Dispositif selon l'une au moins des revendications 1 à 6,
caractérisé en ce que
le support est une bande de transport en position couchée (4) pour circuit fermé.

8. Dispositif selon l'une au moins des revendications 1 à 6,
caractérisé en ce que
le support est un chevalet (50) pouvant être relevé pour l'immobilisation.

9. Dispositif selon l'une au moins des revendications 2 à 8,
caractérisé en ce que
l'électrode (20) est disposée sur un chariot (16) mobile de façon synchrone avec le support (4; 50), de préférence par un entraînement propre (40).

10. Dispositif selon l'une au moins des revendications 2 à 9,
caractérisé en ce que
l'électrode (20) est constituée et positionnée de telle façon qu'elle repose dans sa position de travail dans la zone d'un creux d'aisselle (42) ou d'une voie vers un creux d'aisselle (42) de l'animal à anesthésier.

11. Dispositif selon l'une au moins des revendications 2 à 10,
caractérisé en ce que
deux électrodes (20) sont prévues pour être écartées transversalement à la direction longitudinale du support (4; 50) et pour reposer contre la zone de poitrine de l'animal à anesthésier respectif(6).

12. Dispositif selon l'une au moins des revendications 2 à 11,
caractérisé en ce que
l'électrode (20) monte plus haut que le côté supérieur du support (4; 50) lorsqu'elle est dans sa première position supérieure.
